# EUROPEAN PATENT APPLICATION

(11) **EP 4 697 111 A1**
(43) Date of publication of application: **18.02.2026**
(21) Application number: 25182498.3
(22) Date of filing: 12.06.2025
(51) Int. Cl.: G05B 19/4099, B33Y 50/02

(54) **MANUFACTURING AND QUALIFICATION TECHNOLOGIES**

(30) Priority: 16.08.2024 US 202463684047 P
(71) Applicant: Critical Innovations, LLC, Lawndale, CA 90260 (US)
(72) Inventor: DONALDSON, Ross I., Lawndale, CA 90260 (US); SCAGLIONE, Bernard, Lawndale, CA 90260 (US); YOUNG, Tyler, Lawndale, CA 90260 (US); BUCHANAN, Oliver, Lawndale, CA 90260 (US)
(74) Representative: HGF

(57) **Abstract**

An improved method and device for the automated production and/or qualification of devices and/or device components. The device generally comprises an improved manufacturing technology. The provided device substantially improves upon for automated manufacturing technology.

## Description

### Cross-Reference to Related Application

This application claims priority to U.S. Provisional Patent Application No. 63/684,047 filed August 16, 2024, which is hereby incorporated herein by reference in its entirety.

### Commonly Owned Applications

U.S. Patent Application No. 13/961,422, filed August 7, 2013 and entitled Method and Device for Simultaneously Documenting and Treating Tension Pneumothorax and/or Hemothorax; U.S. Patent Application No. 14/581,339, filed December 23, 2014 and entitled Percutaneous Channel System and Method; U.S. Patent Application No. 16/113,707, filed August 27, 2018 and entitled Percutaneous Access Pathway System; U.S. Patent Application No. 16/354,418, filed March 15, 2019 and entitled Systems and Methods Relating to Medical Applications of Synthetic Polymer Formulations; U.S. Patent Application No. 16/948,885, filed October 5, 2020 and entitled Percutaneous Access Pathway System; U.S. Patent Application No. 17/876,187, filed July 28, 2022 and entitled Wound Treatment Device; U.S. Patent Application No. 18/448,455, filed August 11, 2023 and entitled Percutaneous Access Pathway System; U.S. Patent Application No. 18/485,800, filed October 12, 2023 and entitled Systems and Methods Relating to Medical Applications of Inverse Thermosensitive Polymer Foam Formulations; and U.S. Patent Application No. 18/926,615, filed October 25, 2024 and entitled Autoinjector Assembly are hereby incorporated by reference herein in their entirety.

### Government License Rights

This invention was made with U.S. Government support under contract FA864923P0557, "Fully-Qualified Manufacturing for the Automated, On-Demand, Point-of-Use Production and Qualification of Devices and Device Components," awarded by FA8649 USAF RESEARCH LAB AFRL SBRK. The U.S. Government has certain rights in the invention.

### Technical Field

The present disclosure relates generally to the field of manufacturing and more particularly to the automated production and/or qualification of devices and/or device components.

### Background

Automated manufacturing technologies have revolutionized the production of a wide range of devices and device components. This includes technologies that use additive manufacturing (AM), also known as 3D-printing, which includes stereolithography (SLA), selective laser sintering (SLS), fused deposition modeling (FDM), material jetting, binder jetting, selective laser melting (SLM), direct metal laser sintering (DMLS), electron beam melting (EBM), fused filament fabrication (FFF), and related technologies. This also includes technologies that use Subtractive Manufacturing (SM), which includes computer numerical control (CNC) machining, electrical discharge machining (EDM), laser cutting, water jet cutting, and related technologies.

Automated manufacturing technologies have improved the supply chains of various industries, in many cases relieving the logistical burden of transporting and storing finished goods by allowing production of devices and/or device components in a just-in-time fashion and/or in a distributed location, nearer to the point of use. Examples of industries that have explored such production include both the medical field and aerospace industries. However, although these technologies have improved the ability to produce devices and device components in a distributed manner (e.g., using AM and/or SM), there has not been an equal improvement in the ability to qualify these components upon production (e.g., confirm they are ready for use based on set inspection and/or other production criteria), which has greatly hindered the benefit of such technologies.

In the military realm, future multi-domain battlespace scenarios will benefit from austere, mobile surgical teams in farther forward environments. These teams are moving away from the cumbersome equipment of the past and require surgical capabilities that are small, lightweight, and portable for ease of carrying and mobility. Toward that end, the use of AM has been explored for the production of medical equipment and devices directly at the point of need. This technology has immense potential to transition the supply chain away from a focus on high-volume transportation and storage of finished goods, to the flexible production of needed equipment at point-of-use.

Similarly, on the civilian side, during the early days of the COVID-19 pandemic there was great interest in utilizing AM technology to alleviate identified medical supply shortages. There were multiple well-publicized open-source engineering events focused on COVID-19 response, such as the DIY Hack-a-Vent Innovation Challenge sponsored by SOCOM, as well as other wellintentioned attempts by the general public to produce alternatives to traditionally manufactured Personal Protective Equipment (PPE). Despite the enthusiasm of using AM to fill critical gaps in the medical supply chain, a fundamental obstacle was encountered that prevented use of these devices for their intended medical purposes. These AM-printed devices had not undergone the necessary quality and regulatory compliance requirements after manufacture (e.g., that are required by the FDA) and were thus not human-usable for medical purposes.

While it is relatively straightforward to 3D-print hobby components utilizing current technology, medical devices are regulated by the FDA and require compliance with strict quality and regulatory requirements, including extensive testing and inspection processes post manufacture and before human use, such as strict process and output controls under an established Quality System Regulation (QSR) and according to Current Good Manufacturing Practices (cGMP). These extensive quality systems are in place to ensure that FDA-regulated devices consistently benefit and do not harm patients. However, these regulations (e.g., ISO 13485, CFR Title 21 Part 820) present a logistical hurdle for the point-of-use production of medical devices that has yet to be surmounted in the current art. Although researchers currently have the ability to 3D-print and even sterilize surgical and other medical instruments in a distributed manner (e.g., in far forward and austere environments), the produced instruments are not usable if they have not undergone production under the strict Good Manufacturing Processes (GMP) and Quality Management System (QMS) processes required by the FDA. While the FDA has issued industry guidance for the use of AM in medical device production in a Technical Considerations for Additive Manufacturing Medical Devices Guidance for Industry and Food and Drug Administration Staff Document issued on December 5, 2017, this document focuses primarily on its use under a traditional paradigm.

Under traditional medical device supply chains, manufactured lots are received (or produced) in-house, then inspected, tested, and qualified prior to human use. This process is typically conducted by a quality inspector and/or engineer, and includes the production of quality metrics, risk analysis, and the use of biocompatible materials and testing following ISO 10993. Thus, despite the utility of AM to overcome critical medical supply chain shortages, the inherent nature of this on-demand, point-of-use production means that there is no on-site quality inspector to ensure produced devices meet regulatory requirements. As such, a key gap in current capabilities is the ability to manufacture medical devices, such as surgical tools at point-of-use under GMP/QMS, and then automatically qualify them for use.

While there have been several instances of medical devices and components being 3D-printed for remote use described in the media (e.g., during a disaster, remotely for global health), such devices have not been cleared by the FDA for use. This is because the FDA requires full traceability and testing of medical devices and their components under established and rigorous QSR. For example, initially during the COVID-19 epidemic, there was a shortage of ventilators and there was much interest in the use of AM to produce needed disaster supplies. For a medical device company with an extensive quality system as required by the FDA (e.g. ISO 13486-certified), the AM production of general devices or components (e.g. personal protective equipment, ventilator parts) is relatively straightforward utilizing current technology. However, the difficult part of this challenge is producing FDA-approved (21 CFR§820 QSR and cGMP compliant) devices that are fully qualified once leaving the printer without separate manual inspection and qualification processes needing to be subsequently performed.

Another example is rehabilitative braces, which are commonly indicated for the management of musculoskeletal injuries (MSKIs). Musculoskeletal injuries can affect a wide range of body areas that include bones, joints, cartilages, ligaments, tendons, muscles, and other soft tissues. Braces provide partial rigidity to protect and stabilize a vast array of injury types, while also allowing at least some degree of movement to prevent long-term stiffness and mobility loss. They come in various sizes for different body parts, sides, and injuries, which makes it a major challenge to adequately stock braces *where* they are needed, *when* they are needed, and individualized *for whom* they are needed. Currently, specific braces are manufactured, selected, transported, and stored, based on anticipation of how many of each type of brace will be required, in addition to weight and cube storage restrictions. This is a challenge in hospitals, emergency departments, local drug stores, and is of particular concern in military environments and deployed settings (e.g., Role 1 aid station and higher).

Existing devices, such as ActivArmor^{™} and the Cortex exoskeletal cast, offer personalized and durable casts produced by AM, indicating promising advancements in logistical agility to provide splints at point-of-use. However, existing methods employ hard non-flexible plastics which produce rigid products that fully immobilize the injury site. While certain MSKI injury types warrant use of a hard cast (e.g., the acute management of certain fractures), this is suitable for only a limited range of MSKI injuries. Thus, use cases for these existing products are limited. Further, many common injury types, including those most prominent within the U.S. military, necessitate braces that allow for at least partial mobility. This includes sprains, strains, and many fractures, which benefit from some controlled range of motion during recovery. There is thus a significant and unfilled need for a system that can manufacture flexible, personalized braces on-site and on-demand following MSKI to accelerate recovery, reduce the need for medical evacuation, and facilitate Warfighter return to readiness.

Another example is the manufacture of components in space, such as under ISO 9001 or AS9100, which is used throughout the aerospace industry. Recent advances in technology have extended the lifespan of satellites, requiring the adoption of new capabilities for use in on-orbit servicing and related space logistics support. Key to these endeavors is the ability to repair existing assets and manufacture new components in space, as the need arises. Toward that end, AM has already begun to revolutionize what can be made for and in space. Compared to traditional manufacturing methods (e.g., injection molding, milling, decanting, etc.), AM is optimized for the on-orbit environment, as a variety of products with complex geometries can be made with a small amount of raw material(s) and in a small space. Additionally, AM provides greater flexibility, allowing for design modifications to be immediately reflected in 3D-printed structures. Indeed, 3D-printed products have the potential to be fabricated with unit-level customization optimized to unique mission requirements in-place and on demand.

One of the first 3D-printed parts in space was a wrench produced on the International Space Station. This provided a proof-of-concept demonstration that an on-orbit manufacturing system can produce a design remotely transmitted from the ground. Analyses revealed that microgravity had no significant engineering effects on the process. Groups have since begun to explore the production of AM components for satellites and are working to embed electronics such as complex antennas into printed parts. However, the ability to produce a printed component in space is only the first step. Once a part is produced, it is critical to verify it meets the requirements for intended use. This, for example, could facilitate and integrate with other In-Space Servicing, Assembly, and Manufacturing (ISAM) technologies. Qualifying a component for use is a standard manufacturing step in any industry, yet it is particularly exacting for parts with specialized and high-risk uses (e.g., aerospace). Currently, virtually every part of a spacecraft is physically inspected before reaching the launch pad, down to the nuts, bolts, and individual solder joints. The challenge is then raised for how to do this for any component manufactured on orbit, in the physical absence of a quality inspector or engineer. A key gap in current capabilities is thus the ability to manufacture parts on orbit *and then automatically qualify them for use.*

The literature discloses various additional known methods and devices related to devices and methods related generally to the field of manufacturing and more particularly to the automated production and/or qualification of devices and/or device components. However, all are limited in some aspect.

Each of the patents and published patent applications mentioned above are hereby incorporated by reference.

### Summary

The present disclosure overcomes and substantially alleviates the deficiencies in the prior art by providing improved devices and methods related generally to the field of manufacturing and more particularly to the automated production and/or qualification of devices and/or device components. Under various embodiments, the present disclosure is an improved manufacturing technology that allows the semi-automated or automated, on-demand, point-of-use production and/or qualification of devices and device components. The improved manufacturing technology rapidly produces fully qualified parts by integrating automated manufacturing technology with a suite of pre, intra-, and/or post-processing inspection, evaluation, and/or qualification capabilities. In embodiments, the improved automated manufacturing technology produces parts and automates the subsequent inspection process, delivering a product that is certified and ready to use at the completion of production without need for further quality inspections or manual intervention.

In embodiments, the improved automated manufacturing technology disclosed herein enables the remote manufacture of qualified components in the physical absence of a quality inspector or engineer. This is of great benefit for industries requiring the distributed production of items to strict quality specifications, be it a medical device or a satellite component. In embodiments, after automated production, the system then enables immediate automated inspection and qualification of the produced product for use in remote locations.

In embodiments, the improved manufacturing technology disclosed herein provides improved quality functionality includes part and/or assembly-specific data persistence. This is key to producing parts and assemblies with full manufacturing traceability, meaning that data related to the manufacturing of a particular part and/or assembly can be traced back to that part and/or assembly after the fact. For example, under embodiments the system would automatically inscribe and/or label a part printed using automated manufacturing technologies with a unique identifier code upon production. Afterward, data related to the production of that specific part is saved such that it can be traced back to that specific unique identifier code. For example, if the system tracks ambient temperature in the production environment (e.g., build chamber, storage chamber, external environment), the system enables the ability to trace back the exact temperature during the print of that specific part. In embodiments, other data gathered is similarly stored to enable retrieval by specific unique identifier code (i.e., part number). In embodiments, this technology enables such data persistence for all relevant data generated during production of a part, assembly, and/or lot. In embodiments, this is key to producing parts and assemblies with full manufacturing traceability.

In embodiments, the improved manufacturing technology disclosed herein includes integrated environmental controls to sense changes in and/or modify its production environment (e.g., storage and/or build chambers). Environmental controls provide benefit by enabling quality manufacturing of parts in remote and/or unmonitored environments. By better monitoring and/or modifying these variables (e.g., ambient temperature in the build chamber), the system can more accurately anticipate production outputs (e.g., the cooling time of the layers that have already been printed). Under embodiments, environmental sensors and/or modifiers include those for temperature, humidity, particulate, pressure (e.g., in particular device sections, external environment, internal, pressure differential), light and/or other radiation exposure, orientation, structural integrity, gas measurement, location of device components, bioburden, contaminant levels, air flow, and/or vibration. In embodiments, the improved manufacturing technology has environmental sensors built into its print chamber, storage area, external casing, and/or other areas of the device housing. In connection with environmental modifiers (e.g., heater, air conditioner, heat-pump, humidifier, dehumidifier, filter, disinfectants), this enables the device to track and/or optimize one or more parts of the production environment. For example, a chamber heater can control the ambient temperature in order to allow for more consistent extrusion under AM. In embodiments, one or more parts of the production environment is kept at positive pressure compared to the external environment to enable the device and/or build area to function similar to an enclosed clean room. Under some embodiments, the device is separately maintained and/or certified as a clean room (e.g., under ISO standards).

In embodiments, the improved manufacturing technology disclosed herein includes component input analysis capabilities. The output of automated manufacturing technologies is highly dependent on input components. Additionally, unlike current standard methods, in embodiments the improved manufacturing technology includes integrated materials inspection processes to increase the confidence that produced parts and/or assemblies will meet output requirements. For example, filament used by 3D printers comes in specific diameter sizes (e.g., 1.75mm, 2.85mm). If input filament diameter is out of tolerance (e.g., falls above or below the anticipated diameter due to a manufacturing error), the overall dimensions and volume of an AM part will subsequently be affected. To ensure input filament is of the accepted diameter and meets specifications, in embodiments the system incorporates an integrated filament measuring sensor. This sensor ensures that raw filament consistently falls within an acceptable tolerance range to avoid under- or over-extrusion. Under embodiments, the filament measuring tool is a physical diameter measuring device and/or an optical micrometer. Under embodiments, this sensor is used for in-process inspection to ensure that filament diameter consistently falls within an acceptable range. Under embodiments, component input analysis capabilities include evaluation of mass, temperature, humidity, durometer, diameter, color, chemical composition, and/or shape of raw materials.

In embodiments, the improved manufacturing technology disclosed herein includes one or more automated manufacturing technologies (e.g., AM, SM) with one or more automated manufacturing motion system. In embodiments, automated manufacturing motion system functionality includes self-calibration, as is common in many existing systems to ensure device performance. However, unlike standard automated manufacturing technologies, in embodiments the improved manufacturing technology also has 100% data persistence for self-calibration, ensuring that applicable data is stored for later quality evaluation based on the component's individual part, assembly, and/or lot number. Automated manufacturing technologies are well known in the art and include single- through multi-axes systems, additionally encompassing build-plate motion systems. For example, in embodiments an AM subsystem contains an AM printer motion system, which is essential to the system's ability to move the printer head and produce parts. In some embodiments, the AM printer head can move both left and right, and forwards and backwards, while the build-plate can move up and down. In such a setup, the motion capabilities of this mechanical system thus enable AM printing in three dimensions. In some embodiments, the automated manufacturing motion system includes a multi-head tool-changer that can retrieve and utilize system toolheads (e.g., print head, CNC head, probing tool).

In embodiments, the improved manufacturing technology disclosed herein uniquely integrates existing automated manufacturing technologies with a suite of automated and/or semi-automated inspection and related quality testing capabilities. This full integration and approach provides a novel solution to the problem of remotely manufacturing fully-qualified components. Thus, in embodiments the improved manufacturing technology delivers a turnkey solution providing full end-to-end component production and qualification. In embodiments, the automated and/or semi-automated inspection and related quality testing capabilities occur pre-process, in-process, and/or post-process.

In embodiments, the improved manufacturing technology disclosed herein includes an automated manufacturing motion system that enables the system to print in multiple materials. In embodiments, filament types include PLA, ABS, PETG, nylon, TPE, TPU, wood, HIPS, PVA, PET, PLA metal, PLA carbon fiber, Lignin, polycarbonate, co-polyester, conducive (e.g., graphite-plastic blends), wax, PETT, ASA, PP, POM, acetal, PMMA, acrylic, sandstone, glow-in-the-dark plastic, cleaning materials, PC-ABS, magnetic (e.g., PLA blend), color changing (e.g., plastic blend), nGen, TPC, PORO-LAY, FPE, PEI, aluminum alloys, stainless steel, tool steel, titanium alloys, cobaltchrome superalloys, nickel superalloys, precious metals, other metals, composite materials, conductive filaments, support filament, biodegradable filament, and/or other commercially available filament. Under embodiments, this includes the capacity to utilize high-temperature materials for printing (e.g., high-temperature polymer, polysulfone).

In embodiments, the improved manufacturing technology disclosed herein integrates automated manufacturing technologies with a semi-automated and/or automated inspection subsystem. In embodiments, the semi-automated and/or automated inspection subsystem contains of one or more inspection tools.

In embodiments, one inspection tool example is a reflective laser scanner that has the ability to measure relative and/or absolute distance between scanned surfaces. This inspection tool enables the rapid scanning of an identified layer directly after it has been produced (e.g., from the automated manufacturing technology subsystem). In embodiments, the scanner emits a beam of light that sweeps across the identified object and is then reflected back to the scanner, providing the geometry for that printed layer. This enables a non-contact method of measurement that records precise locations and distances. In embodiments, one inspection tool example is an optical inspection tool (e.g., camera) that enables capture of photographic data (e.g., high-quality photos). This inspection tool enables the system to provide means for a visual inspection. In embodiments, one inspection tool example is a probe for physical inspection (e.g., tactile). In embodiments, one inspection tool example is a bioburden sensor (e.g., encompassing filtration, incubation, and/or enumeration).

In embodiments, the automated manufacturing motion system (e.g., used for AM and/or SM production) also moves one or more inspection tools. Under other embodiments, one or more inspection tools have their own motion system and/or utilize the motion from the production bed. In embodiments, one or more inspection tools are integrated into a multi-tool. Traditional multi-tool capabilities for printing and/or manipulating different material types are common in many automated manufacturing technologies. However, evaluation and testing tools associated with such technologies in the current art are absent or highly limited. In embodiments, the improved manufacturing technology disclosed herein utilizes a multi-tool system to additionally provide one or more inspection tools, in addition to its automated manufacturing technology. In some embodiments, one or more inspection tools are not part of a multi-tool, but otherwise integrated into the device (e.g., a static scanner that functions in conjunction with production bed movement).

In embodiments, improved inspection technology solves a widespread difficulty with AM part inspection due to the wide range of shapes and intricate geometries possible, resulting in some parts that cannot be fully physically inspected after build completion (e.g., a hollow cavity within a part that cannot be reached after production by a probe). In embodiments, the improved manufacturing technology disclosed herein allows inspections at various points during the build (e.g., physical probe inspection midway through a build), which enables evaluation of these types of areas as well as real-time quality testing data not currently available in AM printers. In embodiments, the improved manufacturing technology also includes one or more additional device sensors (e.g., temperature of build volume, build-plate, and/or nozzle; extrusion pressure to ensure layer consistency; bioburden; markers of sterility). In embodiments, the improved manufacturing technology sensor data has 100% persistent datalogging by part and/or lot number, which is also not available in the current art.

In embodiments, the improved manufacturing technology has an array of one or more automated and/or semi-automated inspection processes and/or methods. In embodiments, this enables full inspection, traceability, and/or reporting upon print completion. For example, in embodiments each component produced is automatically marked for traceability with an individual part and/or lot number (e.g., unique identifier code). In embodiments, the improved manufacturing technology utilizes an inspection multi-tool and/or related capabilities (e.g., 3D scanning, physical probing, photogrammetry, structured light, laser triangulation) to evaluate the end product. This enables its software to perform an automated analysis and produce a Certificate of Conformance and/or related reporting, if the final part meets the preset individual quality inspection parameters. Under embodiments, parts that do not meet quality inspection are automatically discarded and/or quarantined, held for manual approval (e.g., remote and/or on-site), and/or not provided to the user (i.e., to prevent the use of non-qualified components from exiting the system). In embodiments, the quality process enables full traceability and 100% data persistence, along with an accessible user backend to examine part-level data for everything that has been fabricated. In embodiments, this ensures full end-to-end traceability, from raw material to final produced part or device, which in embodiments is included in a final report identifying whether a component has passed inspection.

In embodiments, the improved manufacturing technology disclosed herein includes one or more main processing computers. In embodiments, the improved manufacturing technology includes one or more micro-controllers (e.g., to control the motion system). In embodiments, the improved manufacturing technology additionally includes one or more single board computers (e.g., to handle tasks that require more memory or computational power, such as serving the Web UI and calculating complex kinematic movements). In embodiments, these components work together to collect data, which feeds into the main processing computer.

In embodiments, software is programmed to collect sensor readings, as well as print progress data from the 3D printer. The data collection system is able to capture all identified parameters (e.g., at a frequency of one-second intervals).

In embodiments, the inspection subsystem includes expected representation software tailored to develop an accurate three-dimensional (3D) representation of the anticipated produced component and/or assembly based on the input computer software model (e.g. CAD model) based on the selected automated manufacturing technology being used. In traditional automated manufacturing technology production, there are nuanced differences in geometry when comparing an input CAD model to the physical output part and/or assembly created from that model. For example, in AM small artifacts, such as layer lines, are common with any production. Utilizing an idealized CAD-model-based representation of the produced part leads as the basis for automated inspection will lead to falsepositive inspection problems as the system detects these artifacts that are expected based upon the manufacturing method. To overcome this problem with current technology, in embodiments the expected representation software disclosed herein translates the coordinates outlined in the CAD model into a point cloud (e.g., a digital 3D representation of the physical object) that functions as a 3D "map" of the printer's ideal output based on known printer functionality. Each layer is modeled to represent the ideal extrusion, including details such as the in-fill patterns (if applicable) that are used to reinforce the structure. This representation can then be used to compare to the actual output using inspection tool(s) (e.g., a scan of the printed layers extruded by an AM system). This enables the determination of if the produced part meets set inspection criteria.

In embodiments, the improved manufacturing technology disclosed herein additionally includes cybersecurity measures to ensure the system is not compromised; is reduced in weight and volume for launch; and/or includes modifications for zero-gravity. In embodiments, the improved manufacturing technology has additional modifications for operational use during fully unmanned missions, including ensuring the system is compatible with robotic extensions to collect, assemble, and/or implement the produced and/or approved parts as needed. In embodiments, the improved manufacturing technology uniquely integrates existing methods currently used in FFF AM and/or is agnostically applied to other types of manufacture. This means it can be used with a wide range of commercially-available technologies.

In embodiments, the improved manufacturing technology disclosed herein additionally includes a user interface to facilitate interaction with the device by the user. In embodiments, this user interface is one or more of the common user interfaces in the art (e.g., graphical user interface, command-line interface, menu-driven, touch interface, human voice, form-based, natural language, tangible user interface, conversational ui, menus, natural user interface, windows, biometric interfaces, IEEE 1394 interface, macOS, iOS, Android, Linux). In embodiments, the user interface is physically connected to the improved manufacturing technology and/or provides remote access.

In embodiments, in addition to commonly utilized computer aided design (CAD) files, which tell the automated manufacturing technology (e.g., AM, SM component) the physical structure of the selected part for production, the improved manufacturing technology disclosed herein has an accompanying software data (e.g., included in the same file or separately) that tells the system the inspection, testing, and/or production requirements for the part. This enables automated production *and* qualification of the produced part by the same system. In embodiments, the accompanying software integrates information that is normally separately in engineering files (e.g., tolerances, finishes) and/or functional requirements that are typically in other specification documents (e.g., durometer, color) into one complete software file or set of files for upload into the system to enable automated quality assurance activities.

In embodiments, the improved manufacturing technology disclosed herein includes an overarching, integrated, and semi-automated and/or automated quality monitoring system. In embodiments, this includes 100% persistent datalogging of the system performance (e.g., temperatures, accelerations, speeds, forces encountered). In embodiments, this includes device build inspection from raw materials, through in-process, to final build. In embodiments, periodic inspections throughout the build process (e.g., of part geometry) are custom programmable, if desired, and/or automated based on preset software. In embodiments, this spans the full Installation Qualification (IQ), Operational Qualification (OQ), and/or Performance Qualification (PQ) processes.

In some embodiments, system software can automatically change the frequency and complexity of inspections based on past and current build results. For example, if some parameters are non-critical and found to be consistently achieved by the device, the improved manufacturing technology disclosed herein automatically reduces interruptive quality check processes, thus increasing build speed without a reduction in quality assurance. If minor variations are found (e.g., process creep), the system automatically increases quality inspections to ensure product specifications are met.

In embodiments, the improved manufacturing technology disclosed herein provides automated, real-time, and/or in-process corrective action and preventive actions (CAPAs). For example, in embodiments the technology inspects important features layer-by-layer using various inspection tools. When nonconformities are identified by an inspection, the device automatically increases the inspection rate to ensure consistency. Additionally, in embodiments, if a non-conformity is detected the device can automatically determine if there is a corrective action available, such as using subtractive manufacturing to correct dimensions or change printing parameters to correct the issue on following layers. In embodiments, the improved manufacturing technology also takes the next steps to perform automated preventive action to reduce the chances of repeat problems. If nonconformances are discovered, the device has several ways to ensure the rest of the process and any duplicate parts are manufactured to specification. Examples include variation of the extrusion width, adaptive layer heights, temperature compensation, extrusion pressure variation, and/or increased inspection.

In embodiments, the improved manufacturing technology disclosed herein includes one or more automated and/or semi-automated post-production inspection tools and/or processes based on preset individual quality inspection parameters. In embodiments, this means that the system can produce and test components and/or assemblies for compliance with the rigorous rules and regulations set forth by the FDA, cGMP, ISO 13485, and/or AS9100. In addition, in embodiments these inspection processes, techniques, and/or specifications can be preset and/or modified in real-time based on the manufacturing feedback or changes in the desired outputs. In embodiments, the improved manufacturing technology can function anywhere a signal can be transmitted, including on-orbit, in distributed hospitals, or in other locations.

In embodiments, the improved manufacturing technology disclosed herein includes an outer housing. In embodiments, the outer housing provides protection to the inner components. In embodiments, the outer housing provides ruggedization and/or protection against one or more of the following: moisture, physical tampering, fall, vibration, heat, cold, pressure, vacuum, contamination, and/or radiation. In embodiments, the outer housing contains all additional electronics and materials required for part and/or assembly production.

In embodiments, the improved manufacturing technology disclosed herein enables the automated, on-demand, point-of-use production of human-usable surgical instruments for use by surgical teams in austere environments. The improved manufacturing technology produces fully qualified, human-usable surgical instruments (e.g., scalpel handle, Kelly forceps, retractor) to increase surgical capacity and contribute to improved mobility. It also reduces logistical and storage burdens for such instruments in both military and civilian settings.

In embodiments, the improved manufacturing technology disclosed herein rapidly produces fully qualified surgical instruments by integrating additive manufacturing (AM) with a suite of automated inspection and related quality testing capabilities. For medical devices, every aspect of the design, development, and manufacture must be conducted under GMP & QMS processes as required by the FDA, which has previously prevented the simple 3D-printing of medical devices that are human-usable at point-of-need. The improved manufacturing technology overcomes this challenge with a suite of pre-, intra-, and/or post-processing inspection, evaluation, and/or qualification capabilities. In embodiments, the improved manufacturing technology is able to *both* produce parts under GMP/QMS *and* automate the subsequent inspection process, delivering a product that is certified and ready to use at the completion of production without need for further quality inspections or manual intervention.

In embodiments, to produce a fully qualified human-usable surgical instrument and/or other medical device, the user first selects the specific item that is needed from a portfolio of possible devices using the manufacturing-device interface. In embodiments, the stand-alone manufacturingdevices are similar to standard 3D-printers, using Fused Filament Fabrication (FFF) and computer aided design (CAD) files to produce the selected surgical instrument(s). In embodiments, the improved manufacturing technology disclosed herein has additional capabilities. For example, unlike standard 3D-printers, in embodiments the improved manufacturing technology has 100% data persistence, ensuring all data is stored and/or transmitted for later quality evaluation based on the device's individual part and/or lot number (e.g., unique identifier code). This is key to producing parts and devices with full manufacturing traceability. In embodiments, the improved manufacturing technology has integrated probes for physical inspection, optical inspection, and/or laser scanning inspection (e.g., to evaluate the build during and/or after production). In embodiments, the improved manufacturing technology has an array of additional automated post-production inspection tools and/or processes, to enable full inspection, traceability, and/or reporting upon print completion.

In embodiments, an advantage of the improved manufacturing technology disclosed herein is the ability to produce parts using biocompatible materials. In embodiments, an advantage of the improved manufacturing technology is the ability to produce parts using materials that may then be sterilized (e.g., autoclave, chemicals, gas, ionizing radiation, dry-heat, liquid chemicals, performic acid, filtration, microwave, glass bead, vaporized hydrogen peroxide, and/or other sterilizing methods).

For example, in embodiments parts are printed from PPSU (polyphenylsulfone), a high performance high-temperature polymer. PPSU has been evaluated for biocompatibility according to standard ISO 10993-1, -4, -5, -18 and meets the specified requirements for contact of up to 24 hours with skin and tissue and, if applicable, indirect contact with blood. Additionally, PPSU is extremely rigid and has good mechanical properties for the replication of metal parts.

In embodiments, the improved manufacturing technology disclosed herein produces parts via print-in-place models, which enable an entire mechanical assembly to be 3D-printed as a single piece without the need for secondary assembly. In embodiments, this means that the improved manufacturing technology medical device (e.g., surgical instruments printed using PPSU) is ready to be used off the build plate once sterilized. In embodiments, sterilization occurs as a semi-automated and/or automated step integrated with and/or within the improved manufacturing technology. In embodiments, the sterilization is via ethylene oxide, chlorine dioxide, nitrogen dioxide, hydrogen peroxide vapor, peracetic acid vapor, e-beam, x-ray, gamma, autoclave/steam, dry heat, supercritical carbon dioxide, and/or nitric oxide.

In embodiments, the improved manufacturing technology disclosed herein includes the capability to perform partial and/or full assembly of devices post part production. Automated assembly capabilities are well known in the art and, in embodiments, are integrated either partially or fully into the improved manufacturing technology. Examples include robots, assembly mechanisms, fixed automation, robotic assembly, welding, conveyors, dial indexing machine, flexible automation, machines, adhesive dispensing, carousel assembly system, cnc milling, cnc motion control, collaborative robotics, control systems, dial assembly, flexible manufacturing systems, fully automatic, internet of things, lean automation, material handling, quality control, semi-automatic, vision systems, and/or sterilization. For example, in embodiments the produced part is placed via an automated assembly capability into a bag that has been prepared with a sterilant (e.g., chlorine dioxide). The bag is automatically labeled by the improved manufacturing technology and the produced product contains a sterile device within a labeled FDA compliant storage bag.

In embodiments, the improved manufacturing technology disclosed herein can be distributed to hospitals and/or other field sites for distributed production of medical devices (e.g., surgical instruments). In embodiments, a user is able to choose from a library of FDA-regulated devices to enable automated on-demand production for immediate use.

In embodiments, the improved manufacturing technology disclosed herein enables the on-demand, distributed production of braces, splints, and/or casts to accelerate recovery from musculoskeletal injury. In embodiments, the improved manufacturing technology produces braces, splints, and/or casts personalized to the individual patient (e.g., patient size, anthropometric measurements), injury location (e.g., ACL, lateral ankle, proximal inter-phalangeal, etc.), side (i.e., left or right), and/or type (e.g., Grades I-III sprains, etc.) to facilitate healing from musculoskeletal injury. In embodiments, the improved manufacturing technology reduces logistical and/or storage burdens for braces, splints, and/or casts.

In embodiments, to produce a brace, splint, and/or cast, the provider first enters patient specific data into the improved manufacturing technology manufacturing device. In embodiments, the stand-alone manufacturing-device has a low logistical footprint and/or can be distributed depending on predicted need (e.g., at military Role 1 aid stations and higher; civilian urgent cares, emergency departments, and orthopedic clinics). In embodiments, the provider uses standard anthropometric measurements and/or an integrated scanner to enter the patient's affected body part (e.g., ankle) actual or estimated dimensions into the system. In embodiments, dimensions are specific (e.g., measure circumference) and/or more general (e.g., small, medium, large). In embodiments, specific injury type (e.g., lateral Grade II sprain) is also input.

In embodiments, the rest of braces, splints, and/or casts production is fully automated. The improved manufacturing technology disclosed herein automatically converts the input information into a personalized and optimized patient-specific brace. In embodiments, the individualized brace is then robotically produced directly by the system.

In embodiments, the improved manufacturing technology disclosed herein utilizes a method for high-strength, bonded, direct-to-garment additive manufacture, which directly 3D-prints fused elements onto pliant fabric material. In embodiments, the improved manufacturing technology utilizes a fabric with a material that is the same as the material utilized for AM, so the raw printed material is the same as the coating on the fabric. This enables the heat from the extrusion to permanently fuse the components together, creating one unit resulting in a stronger product. For example, in embodiments the improved manufacturing technology utilizes a thin layer of thermoplastic polyurethane (TPU), a flexible and versatile polymer, that is first applied to the selected fabric with a special weave that makes it strong and durable while also being lightweight and elastic. In embodiments, TPU is also used as the filament for 3D-printing, so the raw printed material is the same as the coating on the fabric. The TPU is then 3D-printed directly onto the coated fabric, and the heat from extrusion permanently fuses the components together. In contrast, other methods for 3D-printing on fabric entail taking loose-weave mesh fabric and extruding 3D-printed filament through the woven material (rather than onto it). These other methods lack reproducibility and result in a weaker product, reflecting the difference between stitching versus welding.

In embodiments, the improved manufacturing technology disclosed herein enables the automated production of complex additive manufacturing structures directly onto flexible fabric, enabling an infinite number of possible brace, splint, and/or cast configurations. In embodiments, the improved manufacturing technology cuts each specific brace, splint, and/or cast out of uniform feeder fabric using an integrated laser cutter. In embodiments, this enables customization of the brace to the particular patient and their anatomy, with an infinite number of shapes and sizes possible. In embodiments, this full end-to-end production process is completely automated without need for manual intervention by the provider. In embodiments, the improved manufacturing technology integrates automated additive manufacturing (AM) and laser cutting functionalities with a suite of scanning, inspection, and/or qualification capabilities to produce personalized braces, splints, and/or casts tailored to individual body and injury types.

In embodiments, the improved manufacturing technology disclosed herein enables the distributed production and qualification of components in the space environment. In embodiments, this includes components for In-Space Services Assembly and Manufacturing (ISAM). In various embodiments, this includes parts and/or assemblies for on-orbit servicing, maneuver, debris removal, and/or related space logistics support. Satellite and related space components require production to exacting testing requirements. In embodiments, the improved manufacturing technology assists with the process of creating space infrastructure. In embodiments, examples of use cases for on-orbit manufacture parts include: manufacture of ports and/or other interface mechanisms designed after launch and/or manufactured in space to enable servicing from another spacecraft (e.g., due to a change or addition of a standard interface); manufacture of defensive mechanisms to prevent use of an interface by an enemy; replacing and/or repairing damaged surfaces or components; manufacturing replacement parts to support Rendezvous Proximity Operations (RPO); and/or conducting On-Orbit Object Service through part manufacturing and/or installation on another space vehicle.

There have been illustrated and described herein methods and devices related to manufacturing technology. While particular embodiments of the disclosure have been described, it is not intended that the disclosure be limited thereto, as it is intended that the disclosure be as broad in scope as the art will allow and that the specification be read likewise.

While the improved manufacturing technology disclosed herein has been described with a certain degree of particularity, it is manifest that many changes may be made in the details of construction and the arrangement of components without departing from the spirit and scope of this disclosure. It is understood that the disclosure is not limited to the embodiments set forth herein for purposes of exemplification and that elements of certain embodiments can be combined with elements of other embodiments. Additional objects, advantages, and novel features of the disclosure will be set forth in the description which follows, and will become apparent to those skilled in the art upon examination of the following detailed description and figures. It should be understood that not all of the features described need be incorporated into a given system or method.

### Brief Description of the Drawings

FIG. 1 is a flowchart depicting a method for an improved manufacturing technology (IMT) in accordance with an embodiment of the disclosure.
FIG. 2 is a flowchart depicting a method for an improved manufacturing technology (IMT) in accordance with an embodiment of the disclosure.
FIG. 3 is a schematic representation of an improved manufacturing technology (IMT) in accordance with an embodiment of the disclosure.

### Detailed Description

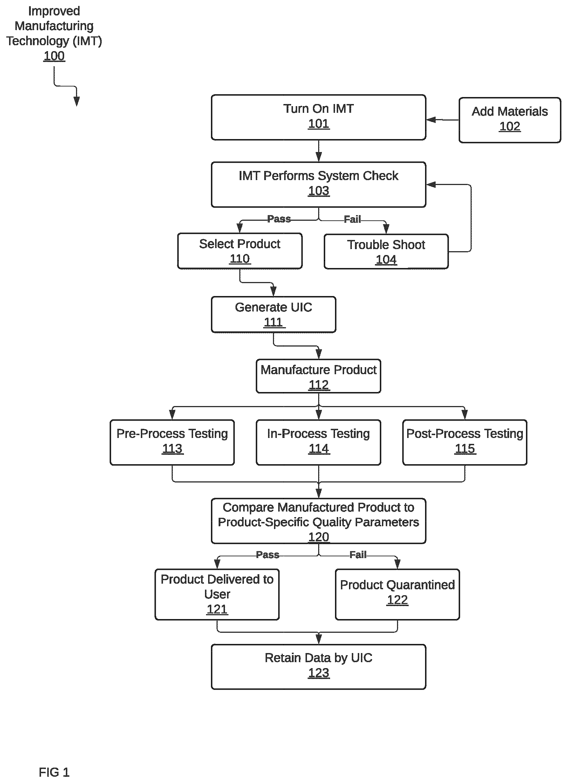

Referring to the drawings, Figure **1** generally illustrates one embodiment of part of the present disclosure. This embodiment can be adapted to fit within standard automated manufacturing technology workflows well known in the art (and not described here). Under this embodiment, the Improved Manufacturing Technology (IMT) **100** is initially turned on at step **101** (e.g., by an end user at a distributed location external to the manufacturer responsible for product quality). In embodiments, raw materials can be added to the IMT at step **102** before and/or after step **101.** In embodiments, the IMT **100** has one or more similar functionalities to standard paper printers: graphical interface, insertion of raw materials (e.g., filament), etc.

Next, IMT **100** performs a system check at step 103. In embodiments, the system check confirms one or more of the following: power check, sensor(s) check, environmental sensor(s) check, temperature check(s), filament diameter check(s), empty production bed check(s), motion system check(s), probe check(s), level check(s), pressure check(s), bioburden check(s), connectivity check(s), storage chamber check(s), production bed check(s), etc. If system check 103 fails, the user may attempt to trouble shoot the problem at step 104 and then the system check 103 can be repeated.

If the system check 103 passes, under embodiments the user may then select the desired product at step 110 (e.g., from a list of products on a graphical user interface). In embodiments, the desired product includes device components and/or full devices. The system then generates a unique identifier code (UIC) at step 111 for the produced product (e.g., a unique device identifier under FDA guidance). In embodiments, the UIC is labeled and/or permanently placed (e.g., engraved and/or embossed) on each individually manufactured product during the manufacture product process. For example, in one embodiment the UIC is embossed in a special area designed for product tracing through the use of additive manufacturing, which automatically adds the UIC to the product in addition to the standard product geometry outlined by its CAD file.

Manufacture product process **112** occurs as described elsewhere in this document. In embodiments, manufacture product process **112** includes the use of one or more automated manufacturing technologies and occurs within the production subsystem (e.g., production bed with automated manufacturing motion system, multi-tool capability).

Before, during, and/or after the manufacturing product process **112,** pre-process testing at step **113,** in-process testing at step **114,** and/or post-process testing at step **115** occurs. These processes occur as described elsewhere in this document. In embodiments, the testing steps include the use of one or more automated inspection technologies (e.g., laser scanner, physical probing, photogrammetry, structured light, laser triangulation, temperature sensors, pressure sensors).

Next, the quality data produced from the individual product build is compared to product-specific quality parameters previously determined by the manufacture at step **120.** For example, in embodiments this comparison includes comparing laser scan data to preset geometric data with approved tolerances. Another example includes comparing environmental sensor data to approved ranges (e.g., production bed temperature).

If the produced product fails the comparison at step **120,** the product is quarantined at step **122.** In embodiments, step **122** includes the physical quarantine of failed product, such that it physically cannot be used by an end user. In embodiments, this includes by IMT **100** putting such product in a "trash" area. In other embodiments, the failed product may still be available to the user but a warning (electronic or otherwise) notifies the user that the product is quarantined (i.e., should not be used).

If the produced product passes the comparison **120,** the product is delivered to the user at step **121.** In embodiments, the product is one or more of the following: made available to the user for use (e.g., available to be removed from the production environment), physically dispensed from IMT **100** (e.g., like a vending machine), dispensed within an outer covering (e.g., dispensed in packaging, such as a bag or box). In embodiments, the packaging may facilitate subsequent sterilization. Examples include double bagging, able to be autoclaved, gas permeable barriers (e.g., for ethylene oxide, chlorine, chloramine), bagging with a chemical disinfectant (e.g., chlorine dioxide), sterilization sensor(s) (e.g., autoclave indicator tape), and/or able to receive ionizing radiation. In embodiments, product sterilization is integrated directly with IMT **100,** such that it occurs in a facilitated, semi-automated, and/or fully-automated part of the process. In embodiments, additional materials are supplied to the end user during step **121.** Examples include the automatic printing of instructions for use (IFU) and/or device-specific labeling (e.g., on dispensed packaging).

Finally, in embodiments data produced during the generation of a particular product is retained by UIC at step **123.** In embodiments, this data is locally retained and/or remotely transmitted to the remote manufacturer responsible for quality oversight.

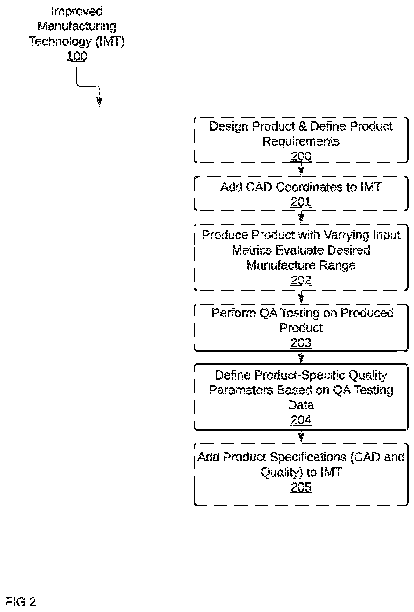

Figure **2** generally illustrates one embodiment of part of the present disclosure. In embodiments, this embodiment can be adapted to fit within quality manufacturing workflows (e.g., ISO 13485, cGMP, ISO 9001, and/or AS9100) well known in the art (and not described here). Under this embodiment, the central manufacture responsible for quality assurance initially designs the product and defines its requirements at step **200.** In embodiments, this process follows standard workflows for device and/or part design and development well known in the art.

Next, the initial geometric coordinates are uploaded to the IMT at step **201.** In embodiments, this step, for example, involves the uploading of CAD files and/or their processed derivatives (e.g., .stl files) into the IMT for automated manufacturing.

Next, the IMT facilitates producing that product with varying input metrics to evaluate desired manufacture range at step **202.** In embodiments, this step, for example, involves varying key parameters to produce multiple iterations of one product for later testing. For example, the temperature within IMT **100** may be purposefully varied by degrees (i.e., hotter and colder). In another example, multiple iterations of one product may be produced, which will innately lead to variations in certain dimensions.

Next, quality assurance (QA) testing is performed by the manufacturer on the produced product iterations at step **203.** In embodiments, this occurs via established testing protocols, which may be different for each product based on product requirements defined under step **200.** For example, a product may have a certain strength it must retain for a particular use as defined by its requirements. This testing step **203** would utilize existing testing methods well known in the art to determine if the iterations produced of the selected product meet or fail that requirement (e.g., by supplying a select force to a selected area and measuring for damage). Examples of testing include benchtop testing, simulation testing, live animal testing (e.g., biocompatibility, safety, efficacy), and actual use testing (e.g., clinical testing, live rocket launch testing).

Next, the data from step **203** is utilized to define product-specific quality parameters at step **204.** In embodiments, for example, the aforementioned test might supply a range of quality parameters that result in the production of individual product iterations that pass all required testing parameters. These quality parameters, which the IMT **100** is capable of measuring, can then be selected as final quality specifications and used in lieu of the other tests (e.g., benchtop force testing that the system is not capable of) for ongoing manufacturing quality monitoring. For example, if testing shows that all iterations of a specific product produced within a particular range of quality parameters result in products that pass required testing, then the IMT **100** passes or fails the produced product based on those quality parameters.

The product specification (CAD and quality) defined under the previous steps are then set and uploaded to end user facing IMT devices at step **205.** In embodiments, the approved product(s) can then be selected by an end user for production according to the process described with respect to Fig. **1****.**

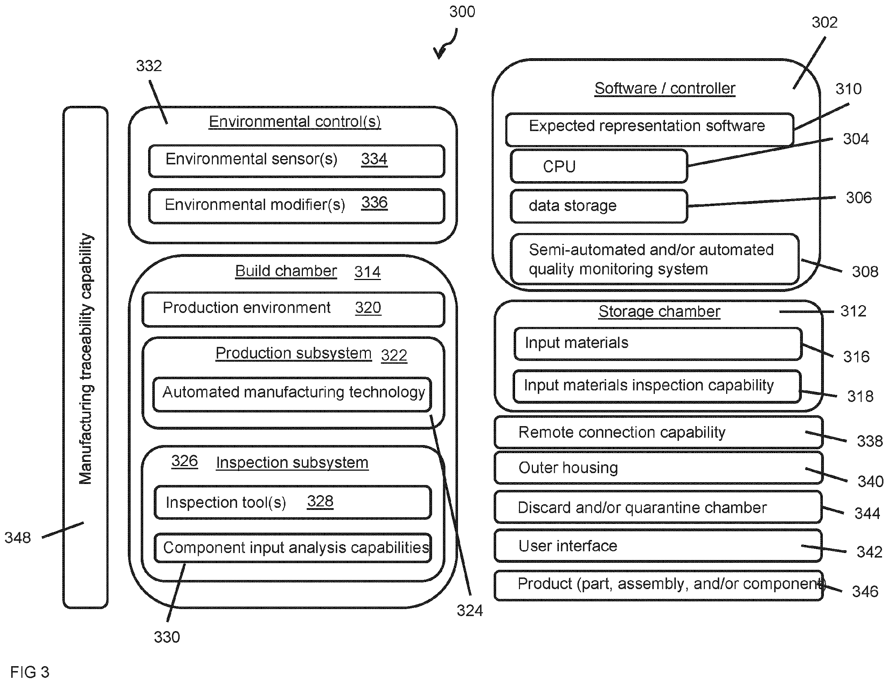

FIG. 3 is a schematic representation of an improved manufacturing technology (IMT) in accordance with an embodiment of the disclosure. Manufacturing system 300 can include a software/controller system 302 configured to operate software to control system functions. Software/controller system 302 can include one or more central processing units 304 and data storage 306. Software/controller system 302 can also operate a semi-automated and/or automated quality monitoring system 308 as described herein. Expected representation software 310 can also be operated by software/controller system 302 as described above.

System 300 can also include a storage chamber 312 and a build chamber 314. Storage chamber 312 can store the input materials 316 used in manufacturing parts and include an input materials inspection capability 318 as described herein. Build chamber 314 can define the production environment 320 in which the parts are manufactured. A production subsystem 322 associated with the build chamber 214 can operate the automated manufacturing technology 324 that manufactures the parts and an inspection subsystem 326 can include one or more inspection tools 328 and provide component input analysis capabilities 330 as described herein. An environmental control system 332 can include one or more environmental sensors 334 and/or environmental modifiers 336 to monitor and/or control the production environment 320 within the build chamber 314.

System 300 can also include a number of additional features and/or capabilities. For example, system 300 can have a remote connection capability 338 that uses suitable electronic equipment to establish communications and/or data transfer with a remote device. An outer housing 340 can surround and protect the physical components of system 300 as described above. A user interface 342 can be provided on the outer housing 340 to control system 300. Additionally or alternatively, user interface 342 can be operated remotely to control system 300 via remote connection capability 338. A discard and/or quarantine chamber 344 can be provided for parts that fail certain qualification checks as described herein. One or more products 346 such as a part, assembly or component will also be present at system 300 once such a product or products 346 is manufactured. System 300 also can include a manufacturing traceability capability 348 as described herein.

In an embodiment, a manufacturing system utilizes one or more automated manufacturing technologies to enable the remote manufacture of qualified components. The system can include at least one build chamber defining a production environment therein. At least one environmental sensor and/or modifier can be configured to provide an integrated environmental control that can sense changes in and/or modify the production environment within the build chamber. A production subsystem can include at least one automated manufacturing technology configured to manufacture a product within the production environment. An inspection subsystem can include at least one inspection tool, the inspection subsystem configured to inspect the manufactured product for compliance with one or more criteria. At least one processor can be configured to verify that the manufactured product is in compliance with the one or more criteria.

In embodiments, the at least one processor is configured to qualify components in the physical absence of a quality inspector or engineer.

In embodiments, the at least one processor is configured to automatically qualify the produced components in compliance with specific quality rules and/or regulations.

In embodiments, the inspection subsystem is configured to analyze one or more input components of the at least one automated manufacturing technology.

In embodiments, the one or more input components can be analyzed by the inspection subsystem to determine a mass, temperature, humidity, durometer, diameter, color, chemical composition, and/or shape of the input components.

In embodiments, the at least one processor is configured to provide a unique identifier code for the manufactured product.

In embodiments, the at least one processor is further configured to store data for the manufactured product from a raw material through the manufactured product to enable traceability of the manufactured product based on the unique identifier code.

In embodiments, the at least one environmental sensor and/or modifier is configured to sense and/or modify one or more of temperature, humidity, particulate, pressure, light and/or other radiation exposure, orientation, structural integrity, gas measurement, location of device components, bioburden, contaminant levels, air flow, and vibration.

In embodiments, the inspection subsystem comprises one or more of a reflective laser scanner, an optical inspection tool, a probe for physical inspection, and a bioburden sensor.

In embodiments, the at least one processor is configured to cause the manufactured part to be automatically discarded and/or quarantined, held for manual approval, and/or not provided to a user if the manufactured part is not in compliance with the one or more criteria.

In embodiments, the at least one processor is configured to operate expected representation software to develop a three-dimensional representation of an anticipated product based on an input computer software model.

In embodiments, the inspection subsystem is configured to compare the manufactured product to the three-dimensional representation of the anticipated product.

In embodiments, the system further comprises an outer housing containing the at least one build chamber, at least one environmental sensor and/or modifier, production subsystem and inspection subsystem.

In embodiments, the system further comprises a user interface disposed on the outer housing to facilitate interaction with the system by a user.

In an embodiment, a method of manufacturing a product can including receiving instructions to manufacture a product, sensing and or modifying at least one environmental factor within a production environment and manufacturing the product with within the production environment with at least one automated manufacturing technology based on the received instructions. The manufactured product can be automatically inspected for compliance with one or more criteria and it can be automatically verified whether or not the manufactured product is in compliance with the one or more criteria based on the inspection.

In embodiments, automatically inspecting and automatically verifying the manufactured product are executed in the physical absence of a quality inspector or engineer.

In embodiments, one or more input components of the at least one automated manufacturing technology can be inspected including determining one or more of a mass, temperature, humidity, durometer, diameter, color, chemical composition, and/or shape of the input components.

In embodiments, a unique identifier code can be provided for the manufactured product.

In embodiments, data for the manufactured product can be stored from a raw material through the manufactured product to enable traceability of the manufactured product based on the unique identifier code.

In embodiments, the manufactured part can be automatically discarded and/or quarantined, held for manual approval, and/or not provided to a user if the manufactured part is in not compliance with the one or more criteria.

Various embodiments of systems, devices, and methods have been described herein. These embodiments are given only by way of example and are not intended to limit the scope of the disclosure. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the disclosure.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

For purposes of interpreting the claims, it is expressly intended that the provisions of 35 U.S.C. § 112(f) are not to be invoked unless the specific terms "means for" or "step for" are recited in a claim.

## Claims

1. A manufacturing system that utilizes one or more automated manufacturing technologies to enable the remote manufacture of qualified components, comprising:
at least one build chamber defining a production environment therein;
at least one environmental sensor and/or modifier configured to provide an integrated environmental control that can sense changes in and/or modify the production environment within the build chamber;
a production subsystem that includes at least one automated manufacturing technology configured to manufacture a product within the production environment;
an inspection subsystem that includes at least one inspection tool, the inspection subsystem configured to inspect the manufactured product for compliance with one or more criteria; and
at least one processor configured to verify that the manufactured product is in compliance with the one or more criteria.

2. The manufacturing system of claim 1, wherein the at least one processor is configured to qualify components in the physical absence of a quality inspector or engineer.

3. The manufacturing system of claim 1 or 2, wherein the at least one processor is configured to automatically qualify the produced components in compliance with specific quality rules and/or regulations.

4. The manufacturing system of any preceding claim, wherein the inspection subsystem is configured to analyze one or more input components of the at least one automated manufacturing technology.

5. The manufacturing system of claim 4, wherein the one or more input components can be analyzed by the inspection subsystem to determine a mass, temperature, humidity, durometer, diameter, color, chemical composition, and/or shape of the input components.

6. The manufacturing system of any preceding claim, wherein the at least one processor is configured to provide a unique identifier code for the manufactured product.

7. The manufacturing system of claim 6, wherein the at least one processor is further configured to store data for the manufactured product from a raw material through the manufactured product to enable traceability of the manufactured product based on the unique identifier code.

8. The manufacturing system of any preceding claim, wherein the at least one environmental sensor and/or modifier is configured to sense and/or modify one or more of temperature, humidity, particulate, pressure, light and/or other radiation exposure, orientation, structural integrity, gas measurement, location of device components, bioburden, contaminant levels, air flow, and vibration.

9. The manufacturing system of any preceding claim, wherein the inspection subsystem comprises one or more of a reflective laser scanner, an optical inspection tool, a probe for physical inspection, and a bioburden sensor.

10. The manufacturing system of any preceding claim, wherein the at least one processor is configured to cause the manufactured part to be automatically discarded and/or quarantined, held for manual approval, and/or not provided to a user if the manufactured part is not in compliance with the one or more criteria.

11. The manufacturing system of any preceding claim, wherein the at least one processor is configured to operate expected representation software to develop a three-dimensional representation of an anticipated product based on an input computer software model.

12. The manufacturing system of claim 11, wherein the inspection subsystem is configured to compare the manufactured product to the three-dimensional representation of the anticipated product.

13. The manufacturing system of any preceding claim, further comprising an outer housing containing the at least one build chamber, at least one environmental sensor and/or modifier, production subsystem and inspection subsystem.

14. The manufacturing system of claim 13, further comprising a user interface disposed on the outer housing to facilitate interaction with the system by a user.

15. A method of manufacturing a product, comprising:
receiving instructions to manufacture a product;
manufacturing the product with the manufacturing technology of any of claims 1-14;
automatically inspecting the manufactured product for compliance with one or more criteria; and
automatically verifying whether or not the manufactured product is in compliance with the one or more criteria based on the inspection.
